# EUROPEAN PATENT APPLICATION

(11) **EP 1 341 274 A1**
(43) Date of publication of application: **03.09.2003**
(21) Application number: 02251446.7
(22) Date of filing: 01.03.2002
(51) Int. Cl.: H01S 3/102, B23K 26/00

(54) **Laser apparatus**

(71) Applicant: GSI Lumonics Ltd., Rugby, Warwickshire CV21 1QN (GB)
(72) Inventor: Naeem, Mohammed, GSI Lumonics Ltd, Rugby, Warwickshire CV21 1 QN (GB); Kugler, Thomas R, GSI Lumonics Inc., Billerica, MA 01821 (US)
(74) Representative: Kensett, John Hinton

(57) **Abstract**

A solid-state laser system having a super-modulating power supply or pumping system and high beam quality (brightness) is disclosed, which has significant benefits and improved operation characteristics and material processing capability over currently available systems.

## Description

### Field of the Invention

This invention relates to laser apparatus. In particular, it relates to a laser source of improved type.

### Background of the Invention

Continuous wave lasers (CW lasers) are commonly used. These are typically solid state lasers and may have Nd:YAG laser rods (laser media) or other types of laser rods. They are commonly used for material processing operations, such as drilling, welding, cutting, ablation, heat treatment and so on, on both metal and non-metal target materials.

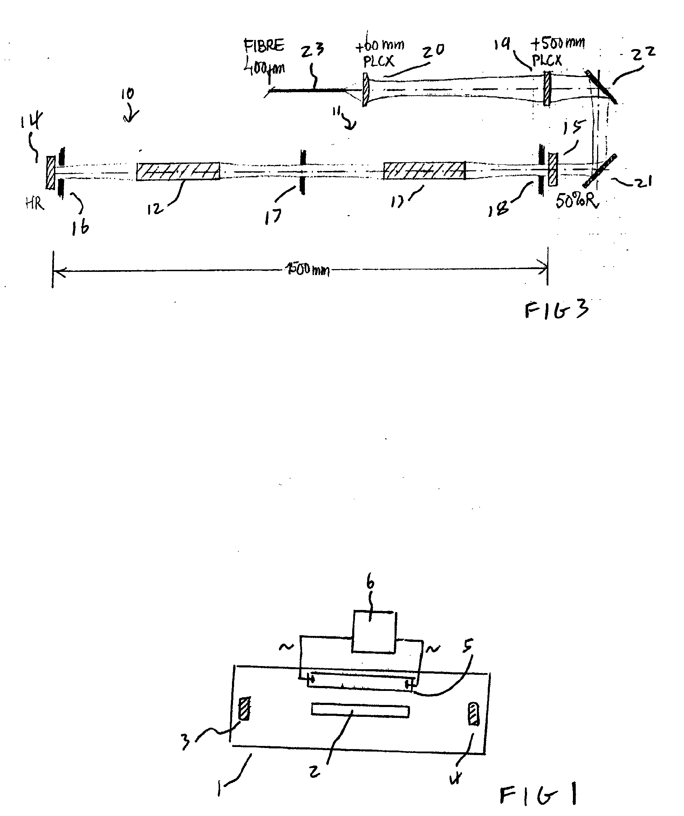

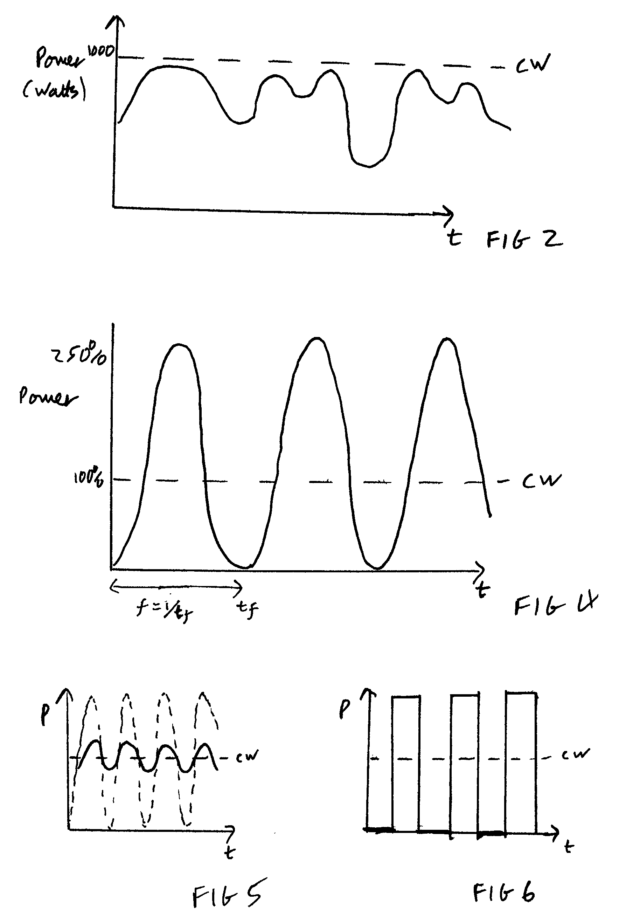

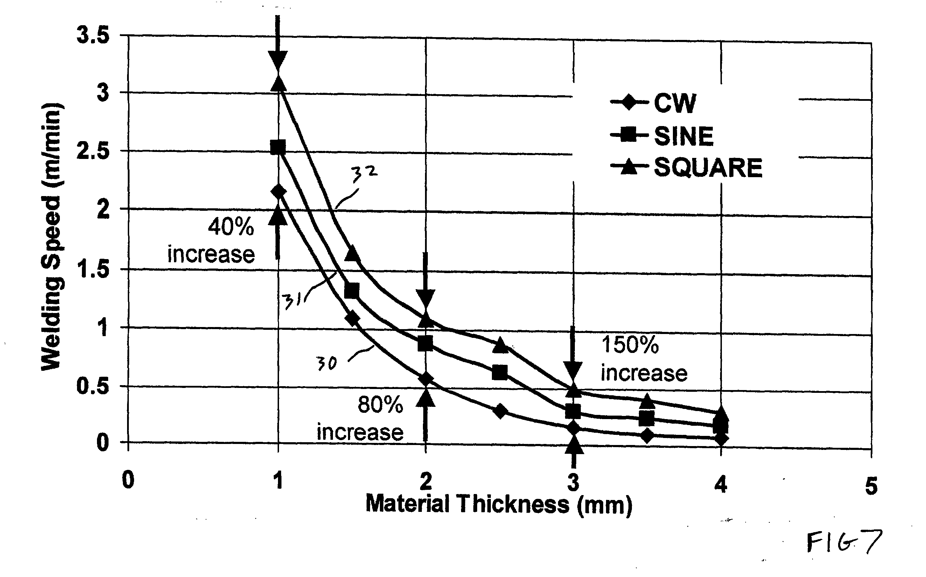

Referring to Figure 1, a CW laser comprises a laser resonator 1 comprising at least one laser rod 2 (typically an Nd:YAG element) which is mounted between two flat mirrors 3 and 4, a high reflectivity rear mirror 3 and a partially transmissive front mirror 4. The laser rod is pumped by one or more pumping elements in the form of lamps 5 which are powered by an electrical source 6 (eg AC source) which generally includes a resonant circuit. Typically this is designed to produce an output of about 15 kilowatts average power and 30 kilowatts peak power. CW lasers have a rated average power and this is shown in Figure 2 as level CW. This may be, for example, 1000 watts. A laser is generally modulated, by altering the power supply to the or each pumping lamp to a level up to the CW level depending upon the power required at any time during a material processing operation. As shown in Figure 2, the level may be dynamically varied up to the CW level to control a processing operation. The CW output is one which can be maintained for 100% of the time as an average level and the laser power is modulated up to this. A parameter known as process speed is in many cases determined by the output and beam quality at any time.

It is sometimes desirable to try to achieve as a fast processing as possible and up to now, this has either been done using high levels of modulation or high beam quality. High modulation is generally achieved with very high frequencies of well above 1500 Hz using effects like Q-switching, phase-locking, accusto-optic modulation and so on and these effects, which are done at high modulation frequency, are designed to produce high single peak but lower average power laser outputs.

The teaching of present laser technology is to try to improve beam quality as much as possible. Beam quality is defined by the size of a spot (or a diameter of a waist in a laser beam) and is generally measured in mm-mrad. In effect, the beam quality, or intensity, is given by power divided by area and so a lower numerical value of this represents a higher beam quality (better beam).

The other current tenent of laser technology presumed that modulating a beam at low levels would only present an advantage with low beam quality equipment (ie numerical values significantly greater that 100 mm.mrad). It has therefore always been assumed, up to now, that either high beam quality, or modulation is required.

Whilst present laser apparatus work reasonably well, there is always room for improvement and efficiency in terms of cost and better material processing and other uses of laser apparatus. The present invention arose in an attempt to provide an improved laser apparatus.

### Brief Summary of the Invention

According to the present invention there is provided a solid-state laser system having a super-modulating power supply or pumping system and high beam quality (brightness).

The laser system is a preferably a Nd:YAG laser system. Most preferably, the output of the laser is of beam quality better than about 100 mm-mrad and the frequency of modulation is between 0 and 1500 Hz.

The average power of the laser is preferably between about 100 watts to about 4000 watts.

It may be between about 400 W and 1000 W specific, non-limiting, examples are 400 W, 500 W, 700 W, 800 W and 1000 W.

The modulated laser output preferably has peak power up to about 250% or less of the laser rated average power and the modulated output may be square wave, sine wave, sawtooth wave or any other wave form. It may be periodic.

In a further aspect the present invention provides a method of using a laser wherein the laser is used in an apparatus producing a beam quality better than 100 mm.mrad and using super modulation.

### Description of the Drawings

Embodiments of the invention will now be described, by way of example only, with reference to the accompanying drawings, in which:
Figure 1 shows schematically a laser pumping chamber;
Figure 2 shows power output of a conventional laser;
Figure 3 shows a laser resonator;
Figure 4 shows a sine wave super modulated output;
Figure 5 shows a sine wave modulated output of different modulation depth;
Figure 6 shows a square wave modulated output;
Figure 7 shows welding speed against material thickness for various types of modulation;
Figure 8 shows beam penetration against defocus for various modulation types; and
Figures 9A and 9B show the effects of kerf lag.

### Detailed Description of Embodiments of the Invention

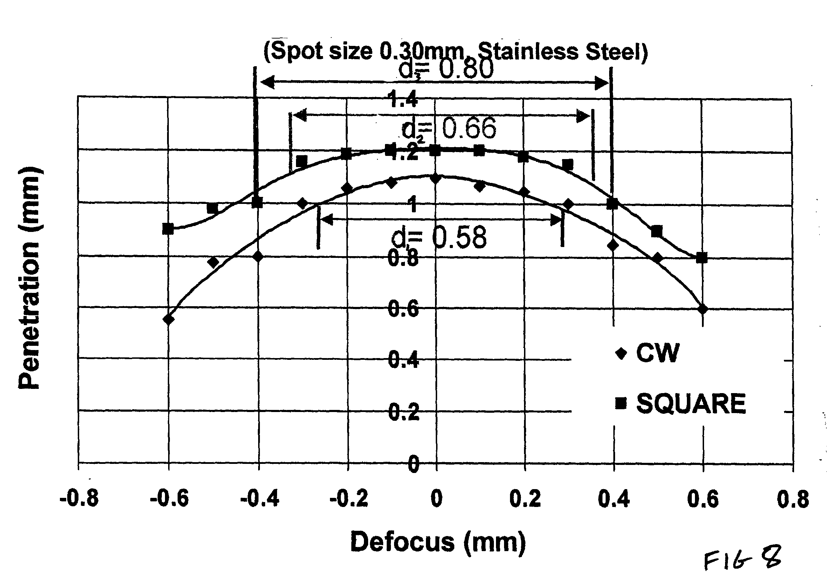

Figure 3 shows a laser resonator. This resonator comprises two flooded ceramic cavities 10, 11 each housing a respective Nd:YAG rod 12, 13. Each chamber includes two arc lamps (not shown) fitted with electrodes for AC excitation, typically up to 8 KW per lamp at 20 - 30 KHz. The resonator is formed between two flat mirrors 14, 15 and these are spaced 1500 mm apart to give a resonator pitch of 750 mm. The cavities are arranged to give a symmetrical periodic resonator controlled by three apertures 16, 17 and 18 each of 3.3 mm diameter placed at the centre point and close to each mirror. The resonator output is imaged down by approximately nine times using 500 mm and 60 mm focal length lenses after passing beam turning mirrors 21, 22 and launched into a 400 µm core diameter fibre 23 or approximately 5 M length. Although not shown, a beam produced from the apparatus is collimated by a 160 mm achromat and focused using a 100 mm achromat, with a compensating meniscus lens, in a cutting head, to give a spot size of 0.27 mm. In other versions, a 200 mm achromat recollimating lens was refocused by a 80 mm triplet lens to give a spot size of 0.16 mm.

The laser as described to used to generate 750 W of power at the source for a drive level 30 KW, with a beam quality of approximately 70 - 80 mm.mrad (diameter x full-angle). The laser was tested using a power supply allowing sine and square wave modulation at enhanced peak power (ie peak power greater than the CW level).

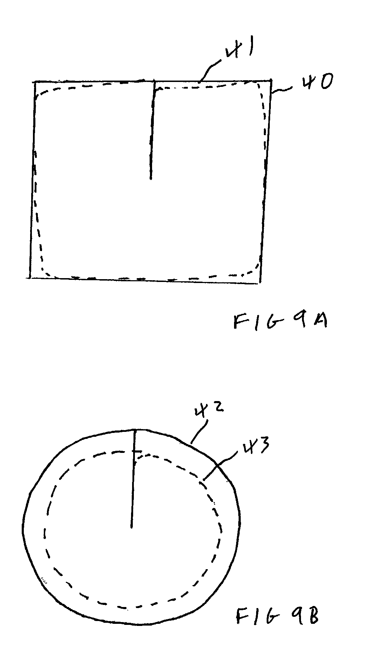

As shown in Figure 4, in embodiments of the invention, a super modulation process is used which enables the modulated beam to be increased, whether periodically or indeed non-periodically, above the CW level. In Figure 4, super modulation in the form of a sine wave is shown which can modulate the beam, in this case periodically, to power of up to 250% or so of the CW level. Methods of achieving modulation are, in themselves, well known. The depth and frequencyf of modulation may be varied and, as shown in Figure 5, may be varied from a large depth of modulation as shown in Figure 4 to a relatively small depth of modulation about the CW level. Figure 6 shows an alternative type of modulation in which square wave modulation is used and in preferred embodiments, modulation levels up to about 250% of CW level have been used.

However, it should be noted that in embodiments of the invention, the output can be sine wave, square wave, or any other wave form, eg sawtooth wave, or other wave, and may be periodic or not periodic.

The modulation frequency is preferably between 0 Hz and 1500 Hz. In this example, the high beam quality of about 70 to 80 mm.mrad in combination with super modulation can provide the laser with peak output powers of up to about 2 KW at 100 Hz modulation frequency, and this falls to about 1700 W at 1440 Hz square wave modulation.

Trials have been carried out using the laser described, using both conventional CW and also super modulated beams, at power levels up to 700 W and with 0.16 mm and 0.27 mm spot sizes. Cutting was performed with air assist at 4 bar pressure. Best results were obtained with the modulated beam at maximum repetition rate (1440 Hz, 640 W average power and 1610 W peak power). The apparatus was used for cutting polycrystalline silicone material, which is conventionally manufactured for solar cells, for example. The material was around 0.5 mm thick and this material is generally extremely brittle and prone to cracking during laser cutting. It is generally cut with conventional lasers at speeds of around 1.5 M/minute. Edge quality with conventional laser processing is generally acceptable but some micro cracking is often produced and this can lead to failure of some components during subsequent process steps and reduction in yield. When the laser apparatus of Figure 3 was used with a conventional CW beam then poor edge quality and unacceptable cracking were found. However, using the modulated scheme of the present invention, cutting speeds of up 14 M/minute were achieved and a significant improvement in edge quality and reduction in cracking were noted.

In practice, the invention is useful when beam qualities of better than about 100 mm.mrad (full angle measurement) are used (that is, numerical values less than or equal to about this) together with the use of super modulation, ie modulation in which the beam is, whether periodically or non-periodically, modulated above the CW level. This leads to lasers of lower average power but high peak power. Typically, modulation frequencies between 0 Hz and 1500 Hz may be used, with varying duty cycle.

Figure 7 shows an example of how welding speed improves for a laser of high beam quality and modulation, as opposed to CW operation. In the figure, three sets of data 30, 31 and 32 are provided, each showing how welding speed varies with material thickness for a particular type of modulation. The first plot 30 shows the situation when CW is used. Plot 30 shows welding speed (in metres per minute) against material thickness in millimetres, for a CW output. Plot 31 shows this for a sine wave output and plot 32 shows this for a square wave super modulated output.

The material to be welded was 304 stainless steel. It is seen that at a material thickness of 1 mm, there is a 40% increase in speed between the CW and square wave performance. At 3 mm, the increase is very substantial, about 150%.

Figure 8 shows the effect of processing depth of focus compared between CW and square wave modulation. The CW output of the laser was 470 W and for a square wave modulated output, at a modulation frequency of 180 Hz, the average power was 350 W and peak power of 700 W. The spot cycle is 0.30 mm and the work piece is stainless steel. It is seen that a significant improvement is made between the CW and square wave outputs.

Approximately 10% more penetration is achieved using the 350 W modulated output rather than the 480 W CW one. Since the average power is less, this is more economical and in practice about 16% less electricity was used to create the same weld. This can lead to significant advantages such as significantly longer lamp life (typically 25% longer) and also the depth of field is improved by nearly 40% for the same weld penetration.

Other advantages of modulation include better cutting and speed and other advantages such as reduction of uncontrolled burning whilst retaining process speed and stability, improvement in off-normal cutting. Better cutting of many materials is achieved, for example galvanised steels and many other materials, including aluminium alloys. In addition, modulation is particularly beneficial for piercing materials. If a slug is to cut out of a material then the normal way this is done is by first piercing the material and then making a closed cut which causes the slug to drop. The use of modulation and thereby higher peak power improves the piercing and improves the cutting process. Smaller, high aspect ratio, piercing holes may be made using modulation in combination with high beam quality.

Thus, by using high peak power modulation, a laser of lower average power can weld to a greater penetration than a similar CW unit but with a reduced heat input. As a practical example of this, when welding a component such a fuel injector where high heat input can distort some very fine parts, welding with a sine-wave output produces the same penetration as CW output but with no distortion. Furthermore, high peak power improves processing of reflective materials and of materials with high heat conductivity such as aluminium alloys.

As Figure 8 shows, the depth of focus with square-wave modulation is improved. In the example shown it is about 0.66 mm (d₂) whereas that for CW is about 0.58 mm (d₁). Additionally, the depth of focus for the same penetration (d₃), ie where the plots 33 (for CW) and 34 (for square-wave) achieve the same penetration, is improved from 0.58 to about 0.80, ie about 138%.

A significant improvement can also be found in relation to the phenomenon of kerf lag. Kerf lag is a phenomenon in which, in cutting through thicker materials, the bottom of the kerf, ie the cut edge of the lower surface of the material tends to lag behind the top surface. For example, when cutting a circle the constant turning path results in the bottom of the cut always being behind and inside the top of the cut. This tends to result in a slug that is tapered and often the curve is so pronounceable that the slug does not drop by itself. Slower speeds do not necessarily eliminate this problem and the physical properties of materials like aluminium also tend to accentuate the effect. The effect is shown schematically in Figures 9a and 9b. Figure 9a shows a generally square or rectangular slug formed by laser cutting. The top surface is shown by the solid line 40 and the lower surface (bottom surface) is shown by the dashed line 41. Due to kerf lag, the bottom of the kerf lags behind the top of the cut and therefore the shape of the bottom is not identical to the that of the top. Figure 9b shows a circular slug. The constant turning path results in the bottom of the cut always being behind and inside the top of the cut and therefore the slug is tapered as is shown by the difference between the top 42 and bottom 43 of the slug.

The use of modulation and high beam quality according to the present invention results in a kerf which is more in line with the beam axis kerf lag is minimised so that gas flow is improved and much lower dross levels and high cutting speeds are achieved. Furthermore, slug drop is increased dramatically.

Accordingly, lower average power lasers using the modulation techniques of the present invention process faster and thicker materials than a CW laser of possibly higher average power.

Note that in the embodiments, the modulation depth can be altered.

Parameters such as angle of cut and quality of cut are significantly improved using the present invention.

The present invention includes any modulation technique which modulates, either periodically or not a beam above the CW level. The modulation may be by use of power supply techniques, ie simply increasing the power supplied to a pumping lamp above that of a level which reduces the CW output or by pumping methods of by other means. Methods of modulating laser outputs are in themselves known, as are methods of improving beam quality.

The invention is applicable to any solid state laser and most preferably to Nd:YAG lasers.

The invention is generally applicable to lasers having a beam quality better than 100 mm.mrad.

Beam quality can be selected by adjustment of resonator length and use of beam-diameter apertures, as is well known, since beam quality is proportional to the area of a limiting aperture, and inversely proportional to effective length of a resonator, as is known. Other methods of adjusting beam quality are known to those skilled in the art.

## Claims

1. A solid-state laser system having a super-modulating power supply or pumping system and high beam quality (brightness).

2. A laser system as claimed in Claim 1, wherein the beam quality is about 100 mm.mrad or better.

3. A laser system as claimed in Claim 1 or 2, wherein the frequency of modulation is between 0 Hz and about 1500 Hz.

4. A laser system as claimed in any preceding claim, comprising one or more Nd:YAG elements.

5. A laser system as claimed in any preceding claim, wherein the average power of the laser is between 100 W and 4000 W.

6. A laser system as claimed in Claim 5, wherein the average power is 500, 400, 800 examples between about 400 W and 100 W.

7. A laser system as claimed in Claim 6, wherein the average power is 400 W, 500 W, 700 W, 800 W and 1000 W.

8. A laser system as claimed in any preceding claim, wherein the laser output is periodic.

9. A laser system as claimed in any preceding claim, wherein the laser output is square-wave or sine-wave.

10. A laser system as claimed in any preceding claim, wherein the peak power of the laser output is up to 250% of the lasers average power.

11. A method of processing material, using a laser system as claimed in any preceding claim.

12. A method of using a laser, wherein the laser is used to produce a beam quality better than about 100 mm.mrad and using super modulation.
